# DEMANDE DE BREVET EUROPEEN

(11) **EP 1 447 252 A2**
(43) Date de publication de la demande: **18.08.2004**
(21) Numéro de dépôt: 04364010.1
(22) Date de dépôt: 10.02.2004
(51) Int. Cl.: B60J 1/20, B60J 7/00

(54) **Rail de guidage pré-équipé pour store de véhicule automobile, ensemble de store, procédé d'assemblage et de montage et véhicule automobile correspondants**

(30) Priorité: 13.02.2003 FR 0301845
(71) Demandeur: WAGON AUTOMOTIVE SNC, 79302 Bressuire Cédex (FR)
(72) Inventeur: Moreau, Stéphane, 49300 Le Puy Saint Bonnet (FR)
(74) Mandataire: Bioret, Ludovic

(57) **Abrégé**

L'invention concerne un rail de guidage (17,18) pré-équipé pour store de véhicule automobile, prévu pour être solidarisé à un élément de structure (31) dudit véhicule et assurant le guidage d'un élément coulissant relié à une barre de tirage (13) d'un écran souple (12), présentant une portion de fixation (21) destinée à venir en contact avec une zone correspondante de ladite structure, portant au moins une agrafe (24) de solidarisation temporaire avec ladite structure, prévue pour recevoir et maintenir temporairement des moyens de solidarisation définitifs (23).

## Description

Le domaine de l'invention est celui des stores, notamment pour véhicule automobile. Plus précisément, l'invention concerne les stores à écran amovible, destiné à être déployé pour occulter une baie non rectangulaire, et circulant dans une fente, ménagée par exemple dans la tablette arrière d'un véhicule, ou dans un boîtier prévu à cet effet.

L'invention concerne notamment les stores à enrouleur, mais d'autres modes de repliement de la toile peuvent, bien sûr, être mis en oeuvre (tels que par exemple un repliement de la toile suivant des plis préformés).

Classiquement, un store à enrouleur présente une toile, ou rideau, formant écran, en position déployée, devant une baie vitrée. La toile est susceptible d'être déroulée ou enroulée au travers d'une fente ménagée dans l'habillage intérieur ou la tablette arrière d'un véhicule.

Une des extrémités de la toile est montée sur un rouleau, ou tube enrouleur, mobile en rotation. L'autre extrémité de la toile est munie d'une barre de tirage.

Selon une technique particulière, à laquelle s'applique l'invention, la barre de tirage est solidaire de deux patins reliés ou montés à ses extrémités, et qui circulent dans des rails pour guider la barre de tirage, et par conséquent la toile d'occultation, entre sa position déployée et sa position repliée. Ce déplacement peut être manuel ou motorisé.

Pour cela, le véhicule automobile doit bien sûr être équipé de rails qui assureront le guidage et le maintien des patins (et plus généralement de tout élément susceptible de coulisser dans un rail, tel que par exemple des roulettes).

Le montage de ces rails sur le véhicule n'est pas une opération facile. En effet, l'emplacement de ces rails, par exemple le long d'une vitre arrière, est un accès difficile, et la place est limitée. Il n'est donc pas aisé de positionner le rail sur un élément de tôle auquel il doit être fixé, le maintenir dans la position adéquate puis de le solidariser à cet élément de tôle, par exemple par vissage. Cela nécessite en outre, en général l'utilisation d'outils particuliers, et de manipulations correspondantes complexes.

En outre, du fait des tolérances nécessaires, il peut y avoir un jeu relativement important, rendant encore plus difficile la mise en place et le montage.

Selon une technique classique, le fond du rail est percé de quelques ouvertures qui permettent le passage de vis. La mise en place suppose donc un ajustement par tâtonnement, jusqu'à ce que le monteur arrive à faire coïncider l'ouverture réalisée dans le rail avec une ouverture correspondante prévue dans la tôle. Il doit ensuite maintenir le rail sans bouger, puis insérer la vis, et enfin la visser, avec un outil pénétrant à l'intérieur du rail. On comprend que ces opérations sont peu aisées, en particulier en rappelant que l'espace disponible pour le monteur est très limité à l'intérieur du véhicule.

Cela conduit à des temps de montage relativement longs, ce qui n'est bien sûr pas souhaitable dans le domaine de la construction à la chaîne, et souvent d'un outillage particulier.

L'invention à notamment pour objectif de pallier ces inconvénients de l'art antérieur.

Plus précisément, un objectif de l'invention est de fournir une technique permettant une mise en place et une solidarisation rapide et aisée d'un rail de guidage de store sur un véhicule automobile.

Un autre objectif de l'invention est de fournir une telle technique, qui soit peu coûteuse, tant lors de la fabrication du rail que lors de son montage.

Encore un autre objectif de l'invention est de fournir au constructeur automobile une technique simplifiant les gammes de montage et le nombre de pièces à manipuler.

Ces objectifs, ainsi que d'autres qui apparaîtront plus clairement par la suite sont atteints selon l'invention à l'aide d'un rail de guidage pré-équipé pour store de véhicule automobile, prévu pour être solidarisé à un élément de structure dudit véhicule et assurant le guidage d'un élément coulissant relié à une barre de tirage d'un écran souple, ledit rail présentant une portion de fixation destinée à venir en contact avec une zone correspondante de ladite structure, portant au moins une agrafe de solidarisation temporaire avec ladite structure, prévue pour recevoir et maintenir temporairement des moyens de solidarisation définitifs.

Il est ainsi très facile de mettre en place le rail sur la structure du véhicule, de régler sa position et de maintenir les moyens de fixation avant solidarisation définitive, sans moyen ou outil particulier.

De façon préférentielle, ladite agrafe comprend un premier cavalier prévu pour chevaucher ladite portion de fixation et un second cavalier prévu pour chevaucher une tôle de la structure dudit véhicule.

Avantageusement, lesdits cavaliers sont ouverts dans des sens opposés, ladite agrafe ayant une forme générale en S.

Selon un mode de réalisation préférentiel de l'invention, ladite portion de fixation s'étend dans une direction sensiblement opposé à celle de l'ouverture dudit rail.

Dans un mode de réalisation particulier de l'invention, lesdits moyens de fixation sont des vis.

Préférentiellement, ladite agrafe présente des lumières permettant le passage desdits moyens de fixation.

Avantageusement, ledit rail comprend un logement de coulissement dudit élément coulissant et un logement pour un câble d'actionnement dudit élément coulissant.

Il peut en outre comprendre, de façon avantageuse, des moyens de réception d'un enjoliveur destiné à dissimuler au moins partiellement ledit rail.

Notamment, lesdits moyens de réception peuvent comprendre une fente s'étendant parallèlement au logement dudit patin et prévue pour recevoir un joint.

Ledit rail peut être galbé, ou rectiligne.

L'invention concerne également le procédé d'assemblage et de montage sur un véhicule d'un tel rail de guidage. Ce procédé comprend les étapes suivantes, lors de l'assemblage :
- obtention dudit rail ;
- mise en place d'au moins une agrafe sur ladite portion de fixation dudit rail ;
et, lors du montage :
- montage dudit rail sur ladite structure, à l'aide de la ou desdites agrafes ;
- mise en place desdits moyens de solidarisation définitifs, maintenus par la ou lesdites agrafes ;
- solidarisation définitive, à l'aide desdits moyens de solidarisation définitifs.

L'invention concerne encore les ensembles de store de véhicule automobile, comprenant un écran souple relié à une barre de tirage guidé à ses extrémités par deux éléments coulissants et deux rails de guidage tels que décrits précédemment.

Enfin, l'invention concerne les véhicules automobiles comprenant au moins un rail de guidage pré-équipé tel que décrit ci-dessus, par exemple pour l'occultation de la vitre arrière dudit véhicule.

D'autres caractéristiques et avantages de l'invention apparaîtront à la lecture de la description suivante d'un mode de réalisation préférentiel de l'invention, donné à titre de simple exemple illustratif et non limitatif, et des figures annexées parmi lesquelles :
- les figures 1A et 1B illustrent un exemple de store, en l'occurrence destiné à équiper une vitre arrière de véhicule, auquel peut s'appliquer l'invention ;
- la figure 2 est une vue en perspective d'une portion d'un rail selon l'invention, équipé d'une agrafe ;
- la figure 3 est une autre vue du rail de la figure 2, le rail ayant été solidarisé à la tôle de la structure du véhicule.

L'invention concerne donc les rails de guidage de stores, et plus précisément le montage de ces derniers dans un véhicule automobile. Elle peut donc s'appliquer dans tous les cas où un tel store est nécessaire, dès lors qu'il est prévu que celui-ci soit entraîné par une barre de tirage circulant dans des rails (que ceux-ci soient parallèles ou non, rectilignes ou galbés,...). Ils peuvent donc équiper par exemple une vitre arrière ou une vitre latérale, un pavillon, une malle arrière, ... ) .

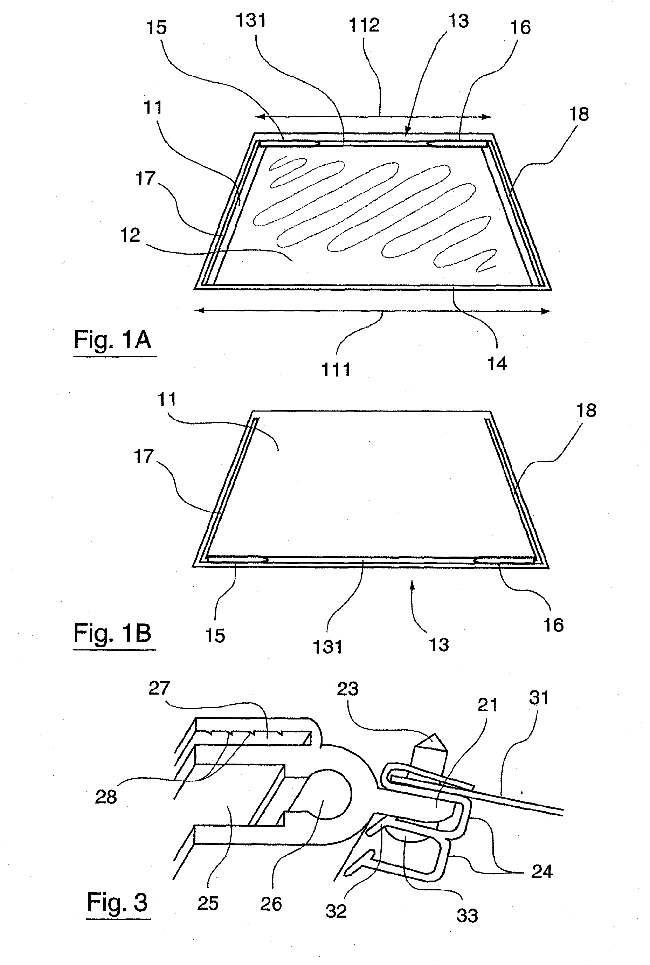

Dans le mode de réalisation décrit ci-après, à l'aide des figures 1A et 1B, le store est destiné à équiper une vitre arrière de forme trapézoïdale, le côté inférieur 111 étant de largeur supérieure à la largeur du côté supérieur 112.

Pour occulter de façon optimale cette surface vitrée trapézoïdale, la toile 12 doit bien sûr avoir une forme une forme similaire. Cela suppose que la barre de tirage est d'une longueur correspondant à celle du petit côté du trapèze définie par la toile, alors que la fente 14 permettant le passage de la toile sous la tablette arrière doit avoir une longueur correspondant à la largeur du grand côté de ce trapèze.

La barre de tirage 13 est solidaire de patins circulant dans des rails 17, 18 montés sur la structure et/ou la garniture du véhicule. Ces rails 17 et 18 suivent également la forme trapézoïdale de la vitre, et ne sont donc pas parallèles. La variation d'écartement entre ces rails est compensée, de façon connue, par l'utilisation d'éléments d'extrémité coulissants, pour former une barre télescopique.

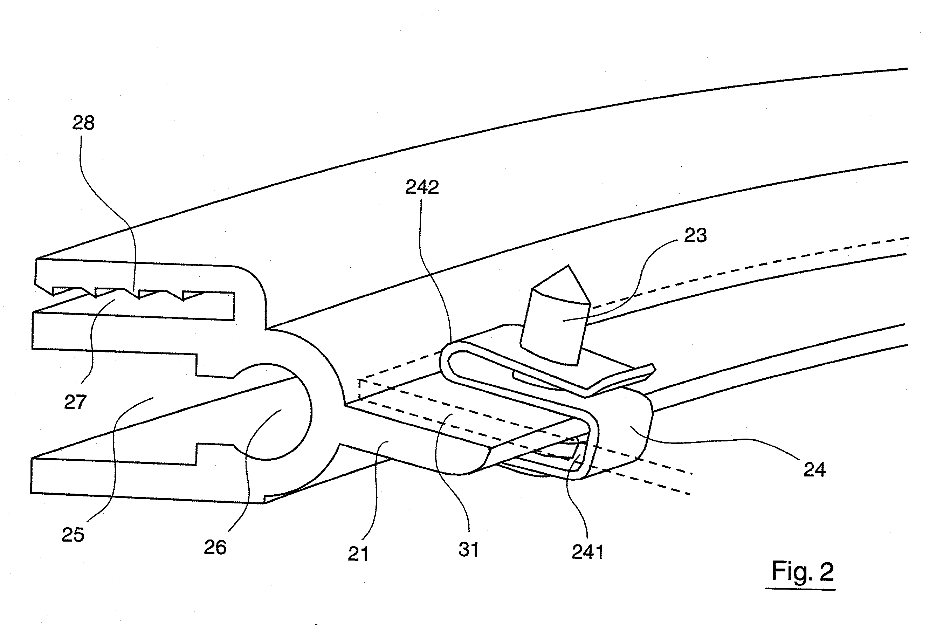

L'invention concerne particulièrement le montage des rails sur la structure du véhicule. A cet effet, et ainsi que cela est illustré par les figures 2 et 3, le rail présente une portion de fixation, qui s'étend sensiblement à l'opposé de l'ouverture du rail, et dont la forme est choisie pour venir en contact avec un élément de tôle de la structure de véhicule 31 (figure 3), auquel il sera solidarisé.

La forme et l'orientation de cette portion de fixation sont bien sûr adaptées en fonction des besoins, de la forme et de l'emplacement de la tôle, et des diverses contraintes imposées par le véhicule.

Le rail est ici un élément monobloc obtenu par exemple par extrusion ou par moulage. On perce ensuite la portion de fixation 21 de plusieurs ouvertures qui permettront le passage des vis 23.

Ensuite, selon l'invention, on rapporte une agrafe 24 sur la portion de fixation 21, au niveau de chacune des ouvertures qui ont été percées. Cette agrafe 24 a une forme générale en S, définissant deux cavaliers s'ouvrant dans des directions opposées. Le premier cavalier 241 vient chevaucher la portion de fixation 21, alors que le second cavalier 242 chevauche la tôle de structure du véhicule.

Le rail est ainsi fourni au constructeur pré-équipé d'agrafes. Il est ainsi facile pour le monteur de mettre en place le rail sur l'élément de tôle 31 prévu à cet effet.

Le cavalier 242 assure alors une solidarisation temporaire du rail sur la tôle, et le monteur n'a pas besoin de tenir le rail, ou de l'immobiliser avec d'autres éléments. En outre, les agrafes permettent un ajustement aisé, d'une part en jouant le rôle de guidage du montage, puisqu'elles indiquent l'emplacement des ouvertures ménagées dans la portion de fixation 21, et d'autres part parce qu'elles permettent de déplacer le rail par rapport à la tôle jusqu'à ce qu'il soit dans la bonne position.

Le monteur n'a plus alors qu'à ramener les moyens de fixation définitifs, qui sont ici des goupilles, ou des vis, 23. Cette vis est montée au travers de l'agrafe 24, munie bien sûr des ouvertures nécessaires pour le passage de la vis. Avantageusement, l'agrafe maintient en outre la vis temporairement, avant vissage. A cet effet, le cavalier 241 peut comprendre des moyens 32 de réception et de maintien de la tête 33 de la vis.

On comprend que le montage de rail et sa solidarisation définitive à la structure du véhicule sont ainsi particulièrement aisés.

Plusieurs variantes à ce principe peuvent bien sûr être envisagées, sans sortir du cadre de l'invention, notamment pour :
- la forme et la direction de la portion de fixation 21 ;
- la forme de l'agrafe, ces emplacements, et le nombre d'agrafes ;
- les moyens de fixation définitifs, qui peuvent également par exemple être des rivets ;
- ...

On notera par ailleurs que le rail de la figure 2 est un rail galbé. Il peut bien sûr, également être rectiligne, et plus généralement de toutes formes adaptées aux contraintes imposées par le véhicule. En outre, les rails peuvent bien sûr être parallèles entre eux ou non.

Ce rail comprend un premier logement 25 de section essentiellement rectangulaire, dans lequel circule le patin, et une portion 26 de section essentiellement circulaire destinée à recevoir le câble d'actionnement du patin.

Par ailleurs, une fente 27 à été définie au-dessus du premier logement 25. Elle est destinée à recevoir un joint, qui sera maintenu par les dents 28, et qui assurera une fonction d'enjoliveurs dissimulant le rail, de façon qu'il soit invisible, ou à tout le moins le moins visible possible à l'intérieur du véhicule.

## Revendications

1. Rail de guidage pré-équipé pour store de véhicule automobile, prévu pour être solidarisé à un élément de structure dudit véhicule et assurant le guidage d'un élément coulissant relié à une barre de tirage d'un écran souple,
**caractérisé en ce qu'**il présente une portion de fixation destinée à venir en contact avec une zone correspondante de ladite structure, portant au moins une agrafe de solidarisation temporaire avec ladite structure, prévue pour recevoir et maintenir temporairement des moyens de solidarisation définitifs.

2. Rail de guidage selon la revendication 1, **caractérisé en ce que** ladite agrafe comprend un premier cavalier prévu pour chevaucher ladite portion de fixation et un second cavalier prévu pour chevaucher une tôle de la structure dudit véhicule.

3. Rail de guidage selon la revendication 2, **caractérisé en ce que** lesdits cavaliers sont ouverts dans des sens opposés, ladite agrafe ayant une forme générale en S.

4. Rail de guidage selon l'une quelconque des revendications 1 à 3, **caractérisé en ce que** ladite portion de fixation s'étend dans une direction sensiblement opposé à celle de l'ouverture dudit rail.

5. Rail de guidage selon l'une quelconque des revendications 1 à 4, **caractérisé en ce que** lesdits moyens de fixation sont des vis.

6. Rail de guidage selon l'une quelconque des revendications 1 à 5, **caractérisé en ce que** ladite agrafe présente des lumières permettant le passage desdits moyens de fixation.

7. Rail de guidage selon l'une quelconque des revendications 1 à 6, **caractérisé en ce qu'**il comprend un logement de coulissement dudit élément coulissant et un logement pour un câble d'actionnement dudit élément coulissant.

8. Rail de guidage selon l'une quelconque des revendications 1 à 7, **caractérisé en ce qu'**il comprend des moyens de réception d'un enjoliveur destiné à dissimuler au moins partiellement ledit rail.

9. Rail de guidage selon la revendication 8, **caractérisé en ce que** lesdits moyens de réception comprennent une fente s'étendant parallèlement au logement dudit patin et prévue pour recevoir un joint.

10. Rail selon l'une quelconque des revendications 1 à 9, **caractérisé en ce qu'**il est galbé.

11. Procédé d'assemblage et de montage sur un véhicule d'un rail de guidage pré-équipé pour store de véhicule automobile, prévu pour assurer le guidage d'un élément coulissant relié à une barre de tirage d'un écran souple,
**caractérisé en ce que**, ledit rail présentant une portion de fixation destinée à venir en contact avec une zone correspondante de ladite structure, portant au moins une agrafe de solidarisation temporaire avec ladite structure, prévue pour recevoir et maintenir temporairement des moyens de solidarisation définitifs, le procédé comprend les étapes suivantes, lors de l'assemblage :
- obtention dudit rail ;
- mise en place d'au moins une agrafe sur ladite portion de fixation dudit rail ;
et, lors du montage :
- montage dudit rail sur ladite structure, à l'aide de la ou desdites agrafes ;
- mise en place desdits moyens de solidarisation définitifs, maintenus par la ou lesdites agrafes ;
- solidarisation définitive, à l'aide desdits moyens de solidarisation définitifs.

12. Ensemble de store de véhicule automobile, comprenant un écran souple relié à une barre de tirage guidé à ses extrémités par deux éléments coulissants et deux rails de guidage prévu pour recevoir et guider lesdits éléments coulissants, **caractérisé en ce qu'**au moins un desdits rails présente une portion de fixation destinée à venir en contact avec une zone correspondante de ladite structure, portant au moins une agrafe de solidarisation temporaire avec ladite structure, prévue pour recevoir et maintenir temporairement des moyens de solidarisation définitifs.

13. Véhicule automobile comprenant au moins un rail de guidage pré-équipé pour store de véhicule automobile, prévu pour être solidarisé à un élément de structure dudit véhicule et assurant le guidage d'un élément coulissant relié à une barre de tirage d'un écran souple,
**caractérisé en ce que** ledit rail présente une portion de fixation destinée à venir en contact avec une zone correspondante de ladite structure, portant au moins une agrafe de solidarisation temporaire avec ladite structure, prévue pour recevoir et maintenir temporairement des moyens de solidarisation définitifs.

14. Véhicule selon la revendication 13, **caractérisé en ce que** ledit store est destiné à occulter la vitre arrière dudit véhicule.
